Europäisches Patentamt

European Patent Office

Office européen des brevets

(19)

(11) Veröffentlichungsnummer: **0 026 741**
**B1**

(12) # EUROPÄISCHE PATENTSCHRIFT

(45) Veröffentlichungstag der Patentschrift:
25.05.83

(21) Anmeldenummer: 80810296.6

(22) Anmeldetag: 22.09.80

(51) Int. Cl.³: **G 01 N 21/55, G 02 B 27/00**

(54) **Messkopf für ein Densitometer.**

(30) Priorität: 28.09.79 CH 8791/79

(43) Veröffentlichungstag der Anmeldung:
08.04.81 Patentblatt 81/14

(45) Bekanntmachung des Hinweises auf die Patenterteilung:
25.05.83 Patentblatt 83/21

(84) Benannte Vertragsstaaten:
**AT CH DE FR GB IT LI NL**

(56) Entgegenhaltungen:
**DE-A-2 231 330**
**DE-A-2 600 604**
**GB-A-1 106 483**
**US-A-3 843 235**

(73) Patentinhaber: **GRETAG Aktiengesellschaft,
Althardstrasse 70, CH-8105 Regensdorf (CH)**

(72) Erfinder: **Mast, Fred, Dr., Fürstenlandstrasse 15,
CH-9500 Wil (CH)**

(74) Vertreter: **Pirner, Wilhelm et al, Patentabteilung der
CIBA-GEIGY AG Postfach, CH-4002 Basel (CH)**

EP 0 026 741 B1

## Meßkopf für ein Densitometer

Die Erfindung betrifft einen Meßkopf für ein Densitometer mit einer Lichtquelle und einer Projektionsoptik zur Beleuchtung eines begrenzten Meßflecks eines Meßobjekts.

In der Densitometrie bestimmt bekanntlich die Größe des Meßflecks, also der von der Lichtquelle ausgeleuchteten Fläche des zu messenden Objekts, die Größe der kleinsten noch zu erfassenden Details und damit der Auflösung. Im Interesse hoher Auflösung wird man daher bestrebt sein, den Meßfleck möglichst klein zu halten. Dem ist jedoch bei den bisher bekannten Densitometern, die den Meßfleck mit über die gesamte Fläche konstanter Lichtindensität ausleuchten, insofern eine Grenze gesetzt, als mit zunehmender Auflösung auch die Meßunsicherheit steigt, da das Meßergebnis dann zunehmend von der relativen Lage des Meßflecks zum Meßobjekt abhängig wird. Dies ist insbesondere bei der Ausmessung von gerasterten Objekten, wie z. B. Offset-Drucken oder dergleichen der Fall, wo bereits geringe Lageveränderungen des Meßflecks zu erheblichen Unterschieden im Meßergebnis führen können.

Die Aufgabe der Erfindung besteht nun darin, einen Meßkopf für ein Densitometer derart zu verbessern, daß er bei gleichbleibender und vorzugsweise sogar bei höherer Genauigkeit bzw. Sicherheit des Meßergebnisses einen kleineren Meßfleck und damit ein höheres Auflösungsvermögen zuläßt.

Erfindungsgemäß wird diese Aufgabe durch die im Anspruch 1 angeführten Maßnahmen und Merkmale gelöst.

Durch den zum Meßfleckrand hin abfallenden Intensitätsverlauf des Meßlichts wird, wie überraschenderweise entdeckt worden ist, die Messung weniger empfindlich auf relative Lageveränderungen zwischen Meßfleck und Meßobjekt, so daß der Meßfleck ohne weiteres verkleinert werden kann, ohne daß die Meßgenauigkeit darunter leiden würde.

Aus der GB-A-982 520 ist eine brechkraftlose Kombination einer Konvex- mit einer Konkavlinse bekannt, wobei eine der beiden Linsen aus Neutral-Grau-Glas besteht. Zweck dieser Linsenkombination ist die Kompensation des bekannten $COS^4$-Lichtabfalls bei Objektiven, insbesondere bei TV-Systemen. Bezüglich der der vorliegenden Erfindung zugrunde liegenden Probleme enthält diese Druckschrift keinerlei Offenbarung.

Im folgenden wird die Erfindung anhand der Zeichnung näher erläutert. Es zeigt

Fig. 1 einen Längsschnitt durch einen erfindungsgemäßen Densitometermeßkopf,

Fig. 2 einen Axialschnitt durch das Filter aus Fig. 11,

Fig. 3 ein Diagramm des Intensitätsverlaufs des Meßlichts über den Meßfleck und

Fig. 4 ein Diagramm verschiedener Meßfehlerverläufe in Abhängigkeit von der Meßfleckgröße.

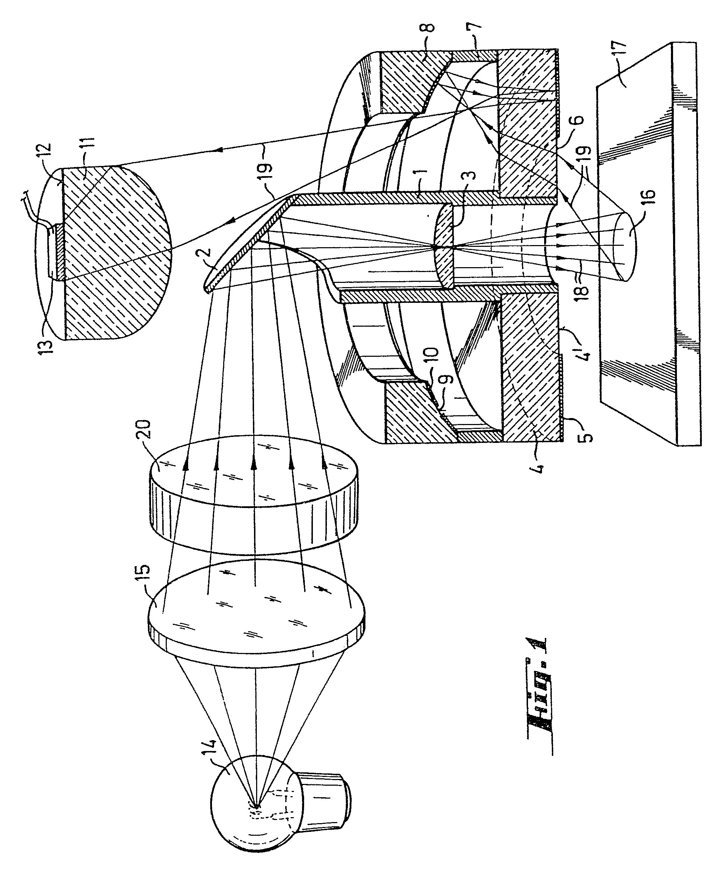

In Fig. 1 sind nur die wesentlichsten, für das Verständnis der Erfindung notwendigen Teile des Densitometermeßkopfs dargestellt.

Das Kernstück der ganzen Anordnung bildet ein beidseits offener Lichtschacht 1, der an seinem oberen Ende mit einem ebenen Umlenkspiegel 2 versehen ist. Etwa in der Mitte des Schachts 1 befindet sich eine Sammellinse 3. Auf dem unteren Ende des Lichtschachts 1 sitzt eine ringförmige planparallele Glasplatte 4, die auf ihrer Unterseite 4' einen ringförmigen Spiegel 5 aufgedampft hat. Der Spiegel 5 bedeckt nicht die gesamte Oberfläche der Glasplatte 4, sondern läßt ein ringförmiges Lichtdurchtrittsfenster 6 frei.

Oberhalb der Glasplatte 4, also in Richtung auf den Umlenkspiegel 2 zu, ist mittels eines Distanzrings 7 ein ringförmiger Glaskörper 8 angeordnet. Dieser besitzt an seiner Unterseite eine sphärisch gewölbte konkave Ringfläche 9, auf der ein entsprechend sphärischer Ringspiegel 10 aufgedampft ist.

Schließlich befindet sich oberhalb des Umlenkspiegels 2 noch eine aplanatische Linse 11 mit einer ebenen Lichtaustrittsfläche 12, auf der ein fotoelektrischer Wandler in Form einer Siliziumplanardiode 13 befestigt ist.

Das von einer Lichtquelle 14 über eine Linse 15 und ein noch näher zu erläuterndes Filter 20 auf den Umlenkspiegel 2 auftreffende Licht wird von diesem in den Lichtschacht 1 umgelenkt und von der Sammellinse 3 auf einen Meßfleck 16 von beispielsweise etwa 1 – 3 mm Durchmesser auf der auszumessenden Oberfläche 17 konzentriert. Die Lichtstrahlen 18 treffen dabei entsprechend dem US-Standard PH 2.17-1958 unter Winkeln im Bereich von 85 – 90° auf die Oberfläche 17 auf. Ein Teil 19 des vom Meßfleck 16 remittierten Lichts wird om Lichtdurchtrittsfenster 6 ausgeblendet, durchsetzt die Glasplatte 4, trifft auf den sphärischen Ringspiegel 10, wird von diesem reflektiert, durchsetzt wiederum die Glaspaltte 4, wird vom ebenen Ringspiegel 5 reflektiert und gelangt schließlich in die aplanatische Linse 11, welche es auf die Fotodiode 13 wirft. Die Geometrie der ganzen Anordnung ist dabei so gewählt, daß nur unter Winkeln im Bereich von $45° \pm 5°$ zur Oberfläche 17 remittiertes Licht auf die Fotodiode gelangen kann.

Näheres über den mechanisch-optischen Aufbau des Densitometer-Meßkopfs ist z. B. der CH-A-607 021 oder der dazu korrespondierenden US-A-4 078 858 zu entnehmen.

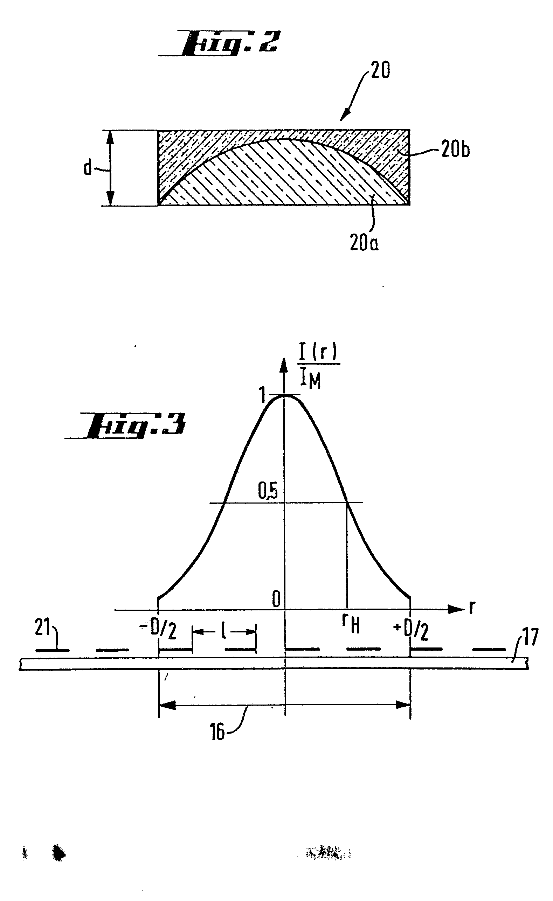

Das im Meßlichtstrahlengang angeordnete Filter 20 besteht aus einer planparallelen Platte, die aus zwei Linsen 20a und 20b zusammengesetzt ist (Fig. 2). Die Linse 20a ist plan-konvex und glasklar. Die Linse 20b ist plan-konkav und grau oder schwarz eingefärbt. Beide Linsen bestehen aus mit dem gleichen Brechungsindex Glas, so daß sie zusammen optisch wie eine homogene planparallele Platte wirken. Die gekrümmten Flächen der beiden Linsen sind sphärisch mit einem Krümmungsradius von etwa 25 bis 6 mm. In einem praktischen Ausführungsbeispiel betrug der Krümmungsradius 12 mm und die Dicke d der Platte 1,2 mm, bei Verwendung von NG 3 als eingefärbtes Glas und einem Durchmesser von 10 mm.

Das Filter 20 hat somit eine von der optischen Achse nach außen abnehmenden Durchlässigkeit. Es bewirkt damit, daß die Intensität des auf den Meßfleck 16 auftreffenden Lichts von der Meßfleckmitte nach außen etwa glockenkurvenartig abfällt. Dieser Intensitätsverlauf ist in Fig. 3 graphisch dargestellt, wobei auf der Ordinate die relative Intensität I(r) bezogen auf die maximale Intensität $I_M$ in der Mitte des Meßflecks 16 aufgetragen ist und die Abszisse den Abstand r vom Meßfleckzentrum angibt. In Fig. 3 ist ferner noch ein Offset-Strichraster 21 mit der Rasterperiode 1 sowie der Meßfleck 16 angedeutet.

Die genaue Form des Intensitätsverlaufs hängt natürlich sehr von der Ausbildung des Filters 20 ab. In der Praxis hat es sich als zweckmäßig erwiesen, wenn die Intensität I(r) in etwa einer Glockenkurve folgt, wobei die Intensität am Meßfleckrand noch etwa 5−10% des Maximalwerts $I_M$ in Meßfleckmitte betragen soll. Außerhalb des Meßflecks (für $r > D/2$) soll die Intensität im wesentlichen Null sein. Derjenige Abstand $r_H$ vom Meßfleckzentrum, in welchem die Intensität des Meßlichts auf die Hälfte gesunken ist (halbe Halbwertsbreite), sollte etwa zwischen 0,225 und 0,375 mal dem Meßfleckdurchmesser D betragen. Vorzugsweise beträgt der Abstand $r_H$ etwa 0,25−0,3 mal dem Meßfleckdurchmesser D. Der genaue geometrische Intensitätsverlauf ist unwesentlich. Die Glockenkurve sollte jedoch im Interesse genügender Lichtintensität (Beleuchtungsstärke) nicht zu schmal sein.

Bei der angegebenen Ausbildung des Filters 20 kann der Intensitätsverlauf mit guter Näherung durch die Formel

$$I(r) = I_M \cdot e^{-\left(\alpha \frac{r}{D}\right)^2} \qquad -0,5\,D \leq r \leq +0,5\,D$$

beschrieben werden. $\alpha$ ist dabei eine Konstante, die entsprechend dem über die Halbwertsbreiten Gesagten zwischen etwa 2,2 und 3,7 liegen kann. Vorzugsweise bewegt sich $\alpha$ zwischen 2,8 und 3,4, insbesondere etwa zwischen 3,0 und 3,2.

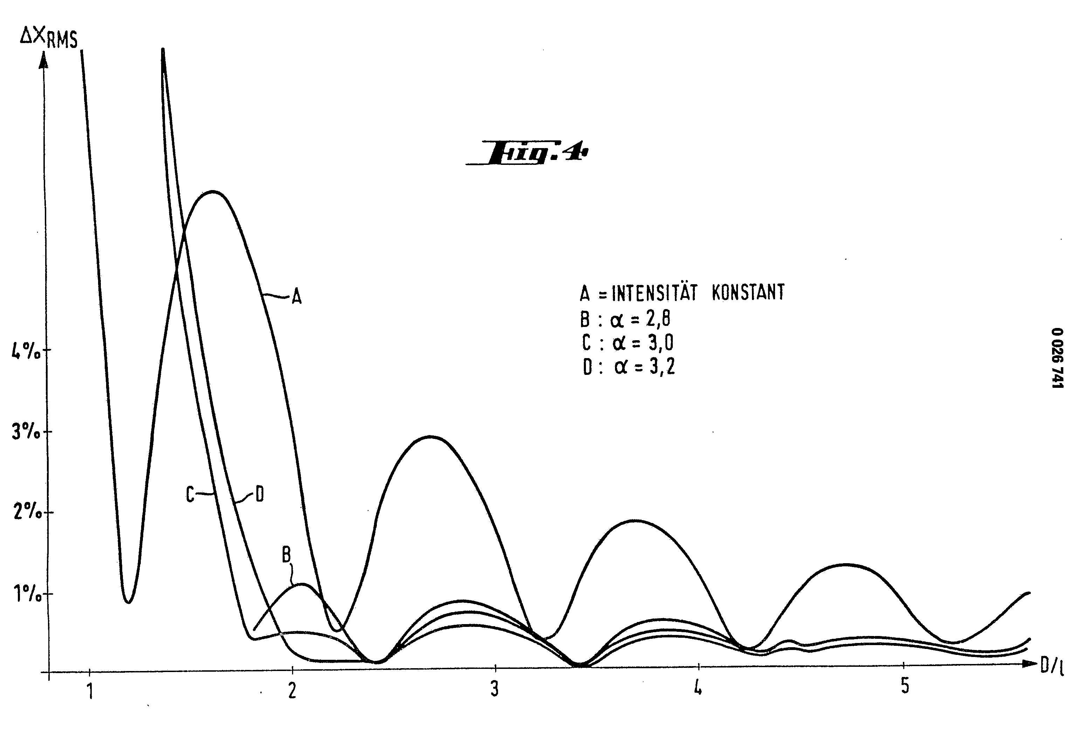

In Fig. 4 ist der relative Meßfehler eines Densitometers in Abhängigkeit von der Meßfleckgröße für verschiedene Verläufe der Intensität des das Meßobjekt beaufschlagenden Lichts graphisch dargestellt. Auf der Ordinate ist der mittlere quadratische Fehler $\Delta X_{RMS}$ (Wurzel aus der gemittelten Fehlerquatratsumme über mehrere Messungen) der Meßwerte aufgetragen. Die Abszisse gibt die Meßfleckgröße D/1 bezogen auf die Offset-Rasterperiode 1 an.

Die Kurve A zeigt die Verhältnisse für die bisher übliche Beleuchtung, bei welcher die Intensität des Meßlichts über den gesamten Meßfleck im wesentlichen konstant ist. Wie man sieht, treten bei noch relativ großem Meßfleckdurchmesser bereits ausgeprägte Meßfehler über 2% auf. Bei einer Intensitätsverteilung nach der Erfindung ist die Situation jedoch erheblich besser. Die Kurven B−D, welche für die Konstanten $\alpha = 2,8$, 3,0 und 3,2 der vorstehend angeführten Formel gelten, zeigen ganz deutlich, daß hier der Meßfehler selbst für einen extrem kleinen Meßfleck, der z. B. nur noch zwei Rasterperioden mißt, noch unter 1% liegt.

Mit dem erfindungsgemäßen Densitometermeßkopf kann also einerseits eine erhebliche Verringerung des Meßfehlers und anderseits eine bedeutende Verkleinerung des Meßflecks und damit Steigerung des Auflösungsvermögens erzielt werden. Dafür ist außerdem nur ein äußerst geringer Aufwand nötig, da sich das Filter aus den beiden Linsen sehr einfach und preisgünstig herstellen läßt.

Vorstehend wurde lediglich ein Reflexions- oder Auflichtdensitometer beschrieben. Es versteht sich, daß die erfindungsgemäße Intensitätsverteilung über den Meßfleck selbstverständlich auch für Transmissions- oder Durchlichtdensitometer geeignet ist.

Ferner versteht es sich, daß das Filter 20 statt im Beleuchtungsstrahlengang auch im Meßstrahlengang angeordnet sein könnte, um so das vom Meßobjekt ausgehende Licht anstatt des auf dieses auftreffenden Lichts zu modulieren.

## Patentansprüche

1. Meßkopf für ein Densitometer mit einer Lichtquelle (14) und einer Projektionsoptik (15, 3) zur Beleuchtung eines begrenzten Meßflecks (16) eines Meßobjekts (17) und einer dem Meßstrahlengang zugeordneten Optik (10, 11) zum Empfang der remittierten Strahlung, dadurch gekennzeichnet, daß die Projektionsoptik (15, 3) oder die dem Meßstrahlengang zugeordnete Optik (10, 11) Mittel umfaßt, welche einen bezüglich des Meßfleckmittelpunkts symmetrischen, im wesentlichen etwa glockenkurvenförmigen Intensitätsverlauf des das Meßobjekt (17) beaufschlagenden bzw. des davon remittierten Lichts erzeugen.

2. Meßkopf nach Anspruch 1, dadurch gekennzeichnet, daß die Intensität des das Meßobjekt beaufschlagenden Lichts in einem Abstand vom Meßfleckmittelpunkt von etwa dem 0,2- bis 0,4fachen des Durchmessers des Meßflecks (16) noch halb so groß ist wie im Meßfleckmittelpunkt.

3. Meßkopf nach Anspruch 1 oder 2, dadurch gekennzeichnet, daß die Intensität des das Meßobjekt (17) beaufschlagenden Lichts am Rand des Meßflecks (16) etwa 5−10% ihres Maximalwerts im Meßfleckmittelpunkt beträgt.

4. Meßkopf nach einem der Ansprüche 1−3, bei dem die genannten Mittel von der Projektionsoptik umfaßt werden, dadurch gekennzeichnet, daß die Intensität des das Meßobjekt (17) beaufschalgenden Lichts der Formel

$$I\,(r) = I_M \cdot e^{-\left(\alpha\,\frac{r}{D}\right)^2} \quad -0{,}5\,D \leq r \leq +0{,}5\,D$$

folgt, worin r der Abstand vom Meßfleckmittelpunkt, D der Meßfleckdurchmesser, $I_M$ die Intensität im Meßfleckmittelpunkt, I(r) die Lichtintensität im Abstand r vom Meßfleckmittelpunkt und $\alpha$ eine Konstante von 2,2 bis etwa 3,7 ist.

5. Meßkopf nach Anspruch 4, dadurch gekennzeichnet, daß $\alpha$ im Bereich von etwa 2,8 bis 3,4, vorzugsweise im Bereich von 3,0 bis 3,2 liegt.

6. Meßkopf nach einem der Ansprüche 1−5, dadurch gekennzeichnet, daß die genannten Mittel durch ein im Strahlengang angeordnetes Filter (20) gebildet sind, dessen Lichtdurchlässigkeit von der optischen Achse weg rotationssymmetrisch abnimmt.

7. Meßkopf nach Anspruch 6, dadurch gekennzeichnet, daß das Filter (20) eine planparallele Platte ist, die aus einer plan-konvexen (20a) und einer plan-konkaven (20b) Linse zusammengesetzt ist, wobei die plan-konkave Linse (20b) eine geringere Transparenz als die plan-konvexe (20a) Linse aufweist.

8. Meßkopf nach Anspruch 7, dadurch gekennzeichnet, daß die plan-konkave Linse (20b) aus neutral grau eingefärbtem Glas besteht.

9. Meßkopf nach Anspruch 7 oder 8, dadurch gekennzeichnet, daß die gekrümmten Flächen der Linsen (20a, 20b) sphärisch sind.

## Claims

1. Measuring head for a densitometer with a light source (14) and an optical projection system (15, 3) for illuminating a defined spot of light (16) of an object to be measured (17) and an optical system (10, 11) co-ordinated to the measurement of light path for the reception of the reflected light, characterised in that the optical projection system (15, 3) or the optical system (10, 11) co-ordinated to the measurement light path comprises means for producing an intensity curve, which is symmetrical relative to the centre point of the defined spot and which is substantially approximately bell-shaped, of the light incident on or reflected from the object (17) to be measured.

2. Measuring head as claimed in Claim 1, characterised in that the intensity of the light incident on the object to be measured at a distance from the centre point of the spot (16) in the range of 0.2 to 0.4 times the defined spot diameter is half as great as at the centre point of the defined spot.

3. Measuring head as claimed in Claim 1 or 2, characterised in that the intensity of the light incident on the object (17) to be measured at the periphery of the defined spot (16) is about 5 to 10% of its maximum value at the centre point of the defined spot.

4. Measuring head as claimed in one of Claims 1 to 3 in which the said means of the optical projection system are comprised, characterised in that the intensity of the light incident on the object (17) to be measured is in accord with the formula

$$I\,(r) = I_M \cdot e^{-\left(\alpha\,\frac{r}{D}\right)^2} \quad \text{for} \; -0{,}5\,D \leq r \leq +0{,}5\,D$$

where r is the distance from the centre point of the defined spot, D is the diameter of the defined spot, $I_M$ is the intensity at the centre point of the defined spot, I(r) is the light intensity at distance r from the centre point of the defined spot, and $\alpha$ is a constant form 2.2 to about 3.7.

5. Measuring head as claimed in Claim 4, characterised in that $\alpha$ is in the range of 2.8 to 3.4, preferably in the range of 3.0 to 3.2.

6. Measuring head as claimed in one of Claims 1 to 5, characterised in that said means comprises a filter (20) which is arranged in the light path and of which the transmissivity decreases symmetrically away from the optical axis.

7. Measuring head as claimed in Claim 6, characterised in that the filter (20) is a plane parallel plate which is formed of plano-convex (20a) and plano-concave (20b) lenses, the plano-concave lens (20b) being of lesser transparency than the plano-convex lens (20a).

8. Measuring head as claimed in Claim 7, characterised in that the plano-concave lens (20b) is of a neural grey glass.

9. Measuring head as claimed in Claim 7 or 8, characterised in that the curved surfaces of the lenses (20a, 20b) are spherical.

## Revendications

1. Tête de mesure pour un densitomètre comportant une source lumineuse (14), un dispositif optique (15, 3) de projection pour éclairer un spot (16) limité de mesure sur un objet (17) et un dispositif optique (10, 11) placé dans le trajet des rayons lumineux de mesure et destiné à recevoir le rayonnement réfléchi, tête caractérisée en ce que le dispositif optique (15, 3) de projection ou le dispositif optique (10, 11) placé sur le trajet des rayons de mesure comporte des moyens qui produisent une variation d'intensité, symétrique par rapport au centre du spot et ayant essentiellement la forme approximative d'une courbe en cloche, de la lumière frappant l'objet (17) à mesurer ou de la lumière réfléchie par celuici.

2. Tête de mesure selon la revendication 1, caractérisée en ce qu'à une distance du centre du spot représentant environ 0,2 à 0,4 fois le diamètre du spot (16), l'intensité de la lumière frappant l'objet à mesurer est encore la moitié de l'intensité au centre du spot.

3. Tête de mesure selon la revendication 1 ou 2, caractérisée en ce que l'intensité de la lumière frappant l'objet (17) représente, au bord du spot (16), environ 5 à 10% de sa valeur maximale au centre du spot.

4. Tête de mesure selon l'une quelconque des revendications 1 à 3, dans laquelle les moyens cités sont entourés par le dispositif optique de projection, tête caractérisée en ce que l'intensité de la lumière frappant l'objet (17) à mesurer suit une variation répondant à la formule:

$$I(r) = I_M \cdot e^{-\left(\alpha \frac{r}{D}\right)^2} \quad -0,5\,D \le r \le +0,5\,D$$

dans laquelle r représente la distance par rapport au centre du spot; D est le diamètre de ce spot; $I_M$ l'intensité au centre du spot; I(r) l'intensité de la lumière à une distance r du centre du spot, et $\alpha$ est une constante valant de 2,2 à environ 3,7.

5. Tête de mesure selon la revendication 4, caractérisé en ce que $\alpha$ se situe entre environ 2,8 et 3,4 et avantageusement entre 3,0 et 3,2.

6. Tête de mesure selon l'une quelconque des revendications 1 à 5, caractérisée en ce que les moyens cités sont constitués par un filtre (20) disposé sur le trajet des rayons et dont la transparence à la lumière diminue à partir de l'axe potique en présentant une symétrie de rotation.

7. Tête de mesure selon la revendication 6, caractérisée en ce que le filtre (20) est une lame à faces parallèles, qui est constituée d'une lentille plan-convexe (20a) et d'une lentille plan-concave (20b), la lentille plan-concave (20b) ayant une transparence plus faible que la lentille plan-convexe (20a).

8. Tête de mesure selon la revendication 7, caractérisée en ce que la lentille plan-concave (20b) consiste en un verre coloré en gris neutre.

9. Tête de mesure selon la revendication 7 ou 8, caractérisée en ce que les surfaces incurvées des lentilles (20a, 20b) sont sphériques.

Fig. 1

**Fig. 2**

**Fig. 3**

Fig. 4

A = INTENSITÄT KONSTANT
B : $\alpha$ = 2,8
C : $\alpha$ = 3,0
D : $\alpha$ = 3,2